# EUROPÄISCHE PATENTSCHRIFT

(11) **EP 2 000 711 B1**
(45) Veröffentlichungstag und Bekanntmachung des Hinweises auf die Patenterteilung: **20.05.2015**
(21) Anmeldenummer: 08006075.9
(22) Anmeldetag: 28.03.2008
(51) Int. Cl.: F16J 15/10, B29C 70/74

(54) **Bauteil mit zumindest einer angeformten Dichtung und Verfahren zu seiner Herstellung**
Component with at least one moulded seal and method for its manufacture
Composant doté d'au moins un joint moulé et son procédé de fabrication

(30) Priorität: 08.06.2007 DE 102007026513
(43) Veröffentlichungstag der Anmeldung: 10.12.2008
(73) Patentinhaber: Gustav Magenwirth GmbH & Co. KG, 72574 Bad Urach (DE)
(72) Erfinder: Walker, Steffen, 70794 Filderstadt (DE); Glaser, Detlef, 72587 Römerstein (DE)
(74) Vertreter: Andrae | Westendorp Patentanwälte Partnerschaft

(56) Entgegenhaltungen:
- EP-A2- 1 617 067
- WO-A1-2005/121611
- DE-A1- 10 324 126
- DE-U1- 8 624 855
- US-A1- 2005 285 354
- US-A1- 2006 066 061

## Beschreibung

Die Erfindung betrifft ein Bauteil mit zumindest zwei angeformten Dichtungen und ein Verfahren zu seiner Herstellung.

Ein Bauteil mit einer angeformten Dichtung ist aus der DE 100 57 379 B4 bekannt.

Bei dem bekannten Bauteil erhält das angespritzte Dichtungsmaterial auf dem Grund der das Dichtungsmaterial aufnehmenden Aufnahmenut eine gewisse Haftung, damit die Dichtung bei dem Transport und der Montage des Bauteils nicht einfach aus der Aufnahmenut herausfallen kann, indem der Nutgrund mit einer gewissen Rauhigkeit ausgeführt wird.

Der bekannte Stand der Technik hat den Nachteil, dass nur eine gewisse Haftung erfolgt und weiterhin die Gefahr besteht, dass die Dichtung herausfallen kann.

Aus der DE 36 39 218 C2 ist es bekannt, das Dichtungsmaterial unter Formung der Dichtung an der Randfläche eines Ventildeckels und unter Zwischenschaltung eines Haftvermittlers anzuspritzen. Dieser Stand der Technik hat den Nachteil, dass die Haftwirkung des Haftvermittlers nachlassen kann, weshalb die Gefahr besteht, dass die Dichtung herausfallen kann.

Aus der US 2006/0066061 A1 ist ein verstärkter Dichtungsring bekannt.

Ein Bauteil mit einer angeformten Dichtung ist aus DE 103 24 126 A1 bekannt.

Der Erfindung liegt daher die Aufgabe zugrunde, ein Bauteil mit zumindest zwei angeformten Dichtungen anzugeben, bei dem die Gefahr, dass die Dichtung von dem Bauteil bei sachgerechter Handhabung getrennt wird, praktisch ausgeschlossen ist.

Die Aufgabe der Erfindung wird mit einem Bauteil gemäß den Merkmalen von Anspruch 1 gelöst. Vorteilhafte Ausgestaltungen der Erfindung sind in den abhängigen Ansprüchen angegeben.

Die erfindungsgemäße Lösung hat den Vorteil, dass wegen der formschlüssigen Verbindung die Dichtung bei dem Transport bzw. der Montage nicht verrutschen und sich auch nicht von dem Bauteil lösen kann. Daher ist die richtige Ausrichtung der Dichtung bei der Montage gewährleistet. Außerdem besteht bei der Materialwahl der Dichtung und des Bauteils ein größerer Spielraum, denn es muss keine Klebeverbindung zwischen der Dichtung und dem Bauteil durch das Anformen der Dichtung erfolgen.

Erfindungsgemäß kann das Bauteil einen Dichtungsmaterialkanal aufweisen, der sich von der Dichtung weg erstreckt und Dichtungsmaterial enthält, das mit der Dichtung einstückig verbunden ist.

Erfindungsgemäß kann das Bauteil mehrere und vorzugsweise zwei Dichtungsmaterialkanäle aufweisen, die sich von einer Dichtung weg erstrecken und Dichtungsmaterial enthalten, das mit der Dichtung einstückig verbunden ist.

Erfindungsgemäß können sich die Dichtungsmaterialkanäle in im wesentlichen entgegengesetzte Richtungen erstrecken.

Erfindungsgemäß können sich der bzw. die Dichtungsmaterialkanäle im wesentlichen und vorzugsweise vollständig innerhalb des Bauteils erstrecken.

Erfindungsgemäß können sich der Dichtungsmaterialkanal bzw. zumindest einer oder einige der Dichtungsmaterialkanäle zumindest zu einer Seite des Bauteils öffnen.

Wenn der Dichtungsmaterialkanal an einer Seite des Bauteils endet, hat das den Vorteil, dass eine visuelle Kontrolle erfolgen kann, dass sich der Dichtungsmaterialkanal vollständig mit Dichtungsmaterial gefüllt hat, so dass die formschlüssige Befestigung der Dichtung an dem Bauteil sicher gewährleistet ist.

Erfindungsgemäß können sich der Dichtungsmaterialkanal bzw. zumindest einer oder einige der Dichtungsmaterialkanäle von der Dichtung in das Bauteil erstrecken.

Erfindungsgemäß können sich der Dichtungsmaterialkanal bzw. zumindest einer oder einige der Dichtungsmaterialkanäle entlang der Oberfläche des Bauteils erstrecken.

Erfindungsgemäß kann der sich entlang der Oberfläche des Bauteils erstreckende Dichtungsmaterialkanal unterhalb der Oberfläche des Bauteils verlaufen.

Erfindungsgemäß kann der sich entlang der Oberfläche des Bauteils erstreckende Dichtungsmaterialkanal zumindest teilweise bis zu der Oberfläche des Bauteils erstrecken, wobei die Breite des Dichtungsmaterialkanals an der Oberfläche des Bauteils kleiner als die größte Breite des Dichtungsmaterialkanals ist. Diese Ausführung hat den Vorteil, dass eine visuelle Kontrolle erfolgen kann, dass sich der Dichtungsmaterialkanal vollständig mit Dichtungsmaterial gefüllt hat, so dass die formschlüssige Befestigung der Dichtung an dem Bauteil sicher gewährleistet ist.

Erfindungsgemäß kann die Breite des Dichtungsmaterialkanals an der Oberfläche des Bauteils weniger als 90%, vorzugsweise weniger als 70%, weiter vorzugsweise weniger als 50%, weiter vorzugsweise weniger als 30%, und bevorzugt ungefähr 10% der größten Breite des Dichtungsmaterialkanals betragen.

Erfindungsgemäß kann die Breite des Dichtungsmaterialkanals an der Oberfläche des Bauteils mehr als 10%, vorzugsweise mehr als 20%, weiter vorzugsweise mehr als 30%, weiter vorzugsweise mehr als 40%, und bevorzugt ungefähr 50% der größten Breite des Dichtungsmaterialkanals betragen.

Zusätzlich können erfindungsgemäß drei angeformten Dichtungen vorhanden sein, wobei zumindest zwei der angeformten Dichtungen auf gegenüberliegenden Seiten des Bauteils angeordnet sein. Dabei können vorzugsweise die gegenüberliegenden Seiten parallel zueinander verlaufen.

Zusätzlich können erfindungsgemäß drei angeformten Dichtungen vorhanden sein, wobei zumindest zwei der angeformten Dichtungen auf aneinandergrenzenden Seiten des Bauteils angeordnet sein. Dabei können vorzugsweise die aneinandergrenzenden Seiten senkrecht zueinander angeordnet sein.

Erfindungsgemäß kann (können) die Dichtung(en) (jeweils) zumindest eine Fluidkanalöffnung des Bauteils umschließen.

Erfindungsgemäß kann das Bauteil aus einem steifen harten Material bzw. Hartkunststoff ausgebildet sein, vorzugsweise aus einem harten Thermoplast bzw. technischen Thermoplast (z.B. PA, PBT, PPS, PEEK usw.), bevorzugt aus PEEK (Polyetheretherketon). Dabei können auch Füllstoffe (z.B. GF, GK, CF usw.) und/oder Verstärkungsfasern (z.B. Glasfasern, Kohlefasern usw.) vorgesehen werden.

Erfindungsgemäß kann das Dichtungsmaterial (der Dichtung(en) bzw. des Materials in den Dichtungsmaterialkanälen) aus einem duroplasten Elastomer ausgebildet sein, vorzugsweise aus einem Kautschuk, bevorzugt aus HNBR, NBR, EPDM. Dabei kann vorzugsweise das Dichtungsmaterial aus TPE, ACM, Silikon, Metall (beispielsweise Kupfer) oder Keramik ausgebildet sein.

Erfindungsgemäß kann die Dichtung in einer Dichtungsnut, Vertiefung und/oder Aufnahme bzw. können die Dichtungen jeweils in einer Dichtungsnut, Vertiefung und/oder Aufnahme angeordnet sein.

Es gibt Dichtungen, die zwischen zwei Bauteilen angeordnet sind, die jeweils mindestens eine Fluidkanalöffnung aufweisen, die mit der jeweils anderen Fluidkanalöffnung zu verbinden sind und mit der Dichtung abgedichtet werden sollen. Es gibt Fälle, bei denen die beiden Fluidkanalöffnungen versetzt zueinander sind und die Fluidverbindung zwischen den beiden Fluidkanalöffnungen durch einen zwischen den beiden zu verbindenden Bauteilen ausgebildeten und die Dichtung begrenzten Kanal gebildet wird. Da beispielsweise bei einem Unterdruck die Gefahr besteht, dass die Dichtung zusammengezogen wird und den zwischen den beiden Bauteilen gebildeten Kanal versperrt, kann man an dem die Dichtung bei der Montage aufnehmenden Teil Stege vorsehen, die ein seitlichen Verrutschen der Dichtung in dem Kanal durch Formschluß verhindern. Wenn man die Dichtung direkt an das Bauteil anformen will, besteht das Problem, dass die Abdichtung des Formwerkzeugs für die Dichtung an dem Bauteil an den der Fluidkanalöffnung zugewandten Enden der Stege schwierig ist.

Es besteht daher die Aufgabe, eine Dichtung anzugeben, die zur Abdichtung eines zwischen zwei Bauteilen ausgebildeten Kanals geeignet ist und gegen ein seitliches Verrutschen in den Kanal gesichert ist.

Diese Aufgabe der Erfindung wird mit einer Dichtung gemäß den Merkmalen von Anspruch 24 gelöst. Vorteilhafte Ausgestaltungen der Erfindung sind in den abhängigen Ansprüchen angegeben.

Alternativ oder zusätzlich ist es auch möglich, die Stege zur Sicherung der Dichtung an dem Bauteil vorzusehen, an das die Dichtung nicht angeformt wird. Alternativ oder zusätzlich kann die an dem Bauteil angeformte Dichtung formschlüssig an dem Bauteil gesichert sein, vorzugsweise gemäß den oben genannten vorteilhaften Ausgestaltungen der Erfindung betreffend das Bauteil mit der formschlüssig gesicherten angeformten Dichtung.

Gemäß einer Ausführung der Erfindung wird eine Dichtung mit einem Dichtungsring zur Abdichtung zumindest einer Öffnung eines in einem ersten Bauteil vorgesehenen Fluidkanals und zumindest einer damit zu verbindenden Öffnung eines in einem zweiten Bauteil vorgesehenen Fluidkanals angegeben, wobei die Dichtung zumindest einen Versteifungssteg aufweist, der zwei Stellen des Dichtungsrings miteinander verbindet.

Die erfindungsgemäße Ausführung hat den Vorteil, dass der Versteifungssteg bzw. die Versteifungsstege ein Verengen der Dichtung verhindern, wenn beispielweise ein Unterdruck anliegt. Daher verringert sich der Strömungsquerschnitt nicht, und die Funktionsfähigkeit bleibt durch die erfindungsgemäße Dichtung gewährleistet.

Erfindungsgemäß kann die Dichtung mehrere Versteifungsstege aufweisen, die vorzugsweise im wesentlichen parallel zueinander verlaufen.

Erfindungsgemäß kann der bzw. können die Versteifungsstege einen im wesentlichen rechteckigen Querschnitt aufweisen.

Erfindungsgemäß können die Öffnungen der zu verbindenden Fluidkanale zueinander versetzt sein.

Erfindungsgemäß können die Öffnungen der zu verbindenden Fluidkanäle jeweils gegenüberliegenden Endabschnitten der Dichtung zugeordnet sein.

Erfindungsgemäß kann der bzw. können der bzw. können die Versteifungsstege zwischen zwei Abschnitten der Dichtung angeordnet sein, die jeweils einer Öffnung der zu verbindenden Fluidkanäle zugeordnet sind.

Erfindungsgemäß kann der bzw. können der bzw. können die Versteifungsstege im wesentlichen senkrecht zu einer gedachten Verbindungslinie zwischen den Öffnungen der zu verbindenden Fluidkanäle verlaufen.

Die Dichtung gemäß der Erfindung bzw. gemäß den vorteilhaften Ausgestaltungen kann auch bei einem erfindungsgemäßen Bauteil gemäß der vorherigen Beschreibung bzw. den Ansprüchen 1 bis 23 bzw. dem Oberbegriff von Anspruch 1 verwendet werden.

Erfindungsgemäß kann der Dichtungsring der Dichtung bzw. können die Dichtungsringe der Dichtungen jeweils einen runden, ovalen, ellipsenförmigen, eiförmigen, rechteckigen, wellenförmigen, quadratischen und/oder krummlinigen Querschnitt aufweisen. Bei einem rechteckigen bzw. quadratischen Querschnitt sind die Ecken vorzugsweise abgerundet bzw. mit einem Radius versehen.

Erfindungsgemäß kann der Dichtungsring der Dichtung bzw. können die Dichtungsringe der Dichtungen jeweils eine runde, ovale, ellipsenförmige, eiförmige, rechteckige, wellenförmige, quadratischen und/oder krummlinige Form aufweisen. Bei der rechteckigen bzw. quadratischen Form sind die Ecken vorzugsweise abgerundet bzw. mit einem Radius versehen.

Erfindungsgemäß kann die Höhe des bzw. der Versteifungsstege mindestens 5% des Höhe der Dichtung, vorzugsweise mindestens 10% des Höhe der Dichtung, insbesondere vorzugsweise mindestens 20% des Höhe der Dichtung, und bevorzugt ungefähr 30% der Höhe der Dichtung betragen.

Erfindungsgemäß kann die Höhe des bzw. der Versteifungsstege höchstens 70% des Höhe der Dichtung, vorzugsweise höchstens 50% des Höhe der Dichtung, insbesondere vorzugsweise höchstens 40% des Höhe der Dichtung, und bevorzugt ungefähr 30% der Höhe der Dichtung betragen.

Andere relative Höhen für die Versteifungsstege sind denkbar. Die Höhe ist so zu wählen, dass einerseits die Höhe der Versteifungsstege hinreichend groß ist, dass ein Verengen der Dichtung bzw. ein zu starkes Verengen der Dichtung verhindert wird, und dass andererseits die Höhe so klein ist, dass eine hinreichende Fluidströmung bei der zwischen den beiden Bauteilen eingespannten Dichtung durch den zwischen den beiden Bauteilen und der Dichtung gebildeten Fluidkanal gewährleistet ist. Die Obergrenze der Höhe ist auch von dem Elastizitätsmodul des Dichtungsmaterials bzw. dem Abstand zwischen den beiden Bauteilen abhängig.

Erfindungsgemäß kann das Bauteil ein statisches Bauteil sein und die zumindest eine angeformte Dichtung kann eine statische Dichtung sein bzw. zumindest eine oder mehrere und vorzugsweise alle der angeformten Dichtungen können statische Dichtungen sein bzw. kann die Dichtung eine statische Dichtung sein.

Ein "statisches" Bauteil bedeutet im Zusammenhang mit der vorliegenden Beschreibung und den vorliegenden Ansprüchen ein Bauteil, das zumindest einen oder mehrere Fluidkanäle aufweist, der bzw. die mit zumindest einem oder mehreren Fluidkanälen von zumindest einem oder mehreren angrenzenden Bauteilen statisch verbunden ist bzw. sind.

Eine "statische" Dichtung bedeutet im Zusammenhang mit der vorliegenden Beschreibung und den vorliegenden Ansprüchen eine Dichtung, die in einem "statischen Bauteil" um eine oder mehrere Öffnungen von zumindest einem und eventuell mehreren Fluidkanälen angeordnet ist und diese statisch gegenüber einer oder mehreren Öffnungen von zumindest einem und eventuell mehreren weiteren Fluidkanälen abdichtet, die in einem angrenzenden Bauteil angeordnet ist, das nicht unbedingt statisch ist, aber relativ zu dem statischen Bauteil statisch ist.

Erfindungsgemäß können die Dichtungen durch Spritzpressen (Transfer-Moulding) oder Spritzgießen (Injection-Moulding) angeformt werden. Diese Verfahren sind dem Fachmann bekannt. Beipsielsweise können dabei Umsetzverfahren, Mehrkomponentendrehwerkzeuge, Indexverfahren und/oder Schieberwerkzeuge eingesetzt werden.

Die Erfindung wird im folgenden anhand der in den Figuren gezeigten Ausführungsbeispiele näher beschrieben.
- Fig. 1: zeigt eine Querschnittsansicht eines Bauteils gemäß einer ersten Ausführung der Erfindung entlang der Linie I-I von Fig. 2.
- Fig. 2: zeigt eine Aufsicht des Bauteils von Fig. 1.
- Fig. 3: zeigt eine perspektivische Ansicht des Bauteils von Fig. 1.
- Fig. 4: zeigt eine Querschnittsansicht eines Bauteils gemäß einer zweiten Ausführung der Erfindung entlang der Linie IV-IV von Fig. 5.
- Fig. 5: zeigt eine Aufsicht des Bauteils von Fig. 4.
- Fig. 6: zeigt eine perspektivische Ansicht des Bauteils von Fig. 4.
- Fig. 7A: zeigt eine Querschnittsansicht eines Bauteils gemäß einer dritten Ausführung der Erfindung entlang der Linie VIIA-VIIA von Fig. 8.
- Fig. 7B: zeigt eine Querschnittsansicht des Bauteils von Fig. 7A entlang der Linie VIIB-VIIB von Fig. 8.
- Fig. 7C: zeigt eine Querschnittsansicht des Bauteils von Fig. 7A entlang der Linie VIIC-VIIC von Fig. 8.
- Fig. 8: zeigt eine Aufsicht des Bauteils von Fig. 7A.
- Fig. 9A: zeigt eine perspektivische Ansicht des Bauteils von Fig. 7A schräg von oben.
- Fig. 9B: zeigt eine perspektivische Ansicht des Bauteils von Fig. 7A schräg von unten.
- Fig. 10A: zeigt eine Querschnittsansicht eines Bauteils gemäß einer vierten Ausführung der Erfindung entlang der Linie XA-XA von Fig. 11.
- Fig. 10B: zeigt eine Querschnittsansicht des Bauteils von Fig. 10A entlang der Linie XB-XB von Fig. 11.
- Fig. 11: zeigt eine Aufsicht des Bauteils von Fig. 10A.
- Fig. 12A: zeigt eine perspektivische Ansicht des Bauteils von Fig. 10A schräg von unten.
- Fig. 12B: zeigt eine perspektivische Ansicht des Bauteils von Fig. 10A schräg von oben.
- Fig. 13A: bis 13F zeigen Varianten der Querschnittsform eines Dichtungsmaterialkanals für ein erfindungsgemäßes Bauteil.
- Fig. 14: zeigt eine Aufsicht eines erfindungsgemäßen Dichtungselements für ein Bauteil gemäß einer weiteren Ausführung der Erfindung.
- Fig. 15: zeigt einen Querschnittsansicht des Dichtungselements von Fig. 14 entlang der Linie XV-XV von Fig. 14.

In der Beschreibung des Ausführungsbeispiels werden folgende Bezugszeichen verwendet:
- 10: Bauteil
- 11, 12: Fluidkanal
- 13, 14, 15: Dichtungsmaterialkanal
- 16: Stufe

- 20: Dichtungsmaterial
- 21, 22: Dichtung
- 23, 24, 25: Dichtungsmaterialsteg
- 1026: Versteifungssteg

- 1026: Versteifungssteg
- 1027: Versteifungssteg
- 1028A: Dichtungsabschnitt
- 1028B: Dichtungsabschnitt
- 1028C: Dichtungsabschnitt
- 1031: Fluidkanal
- 1032: Fluidkanal

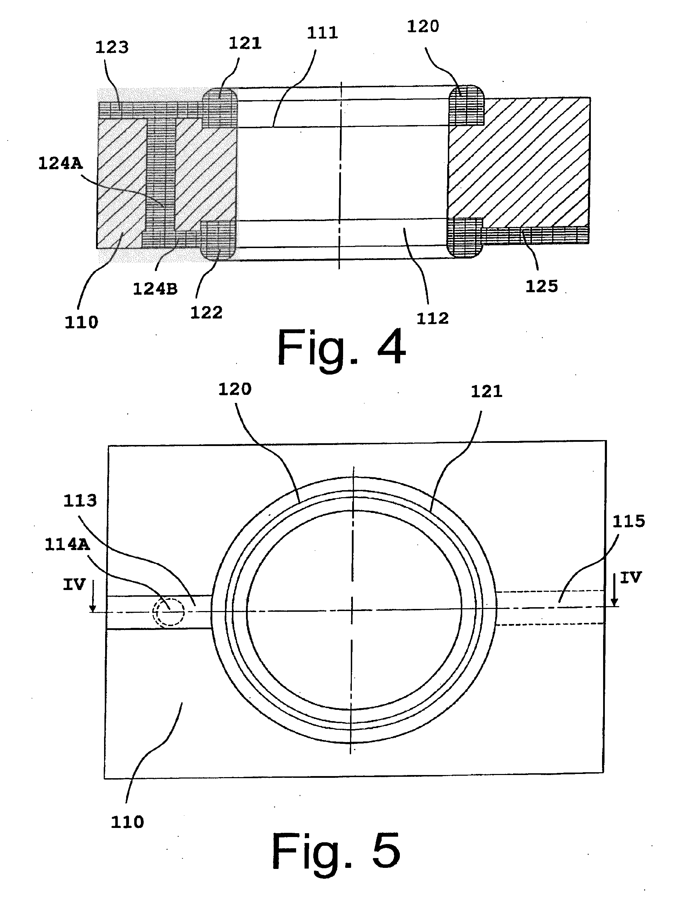

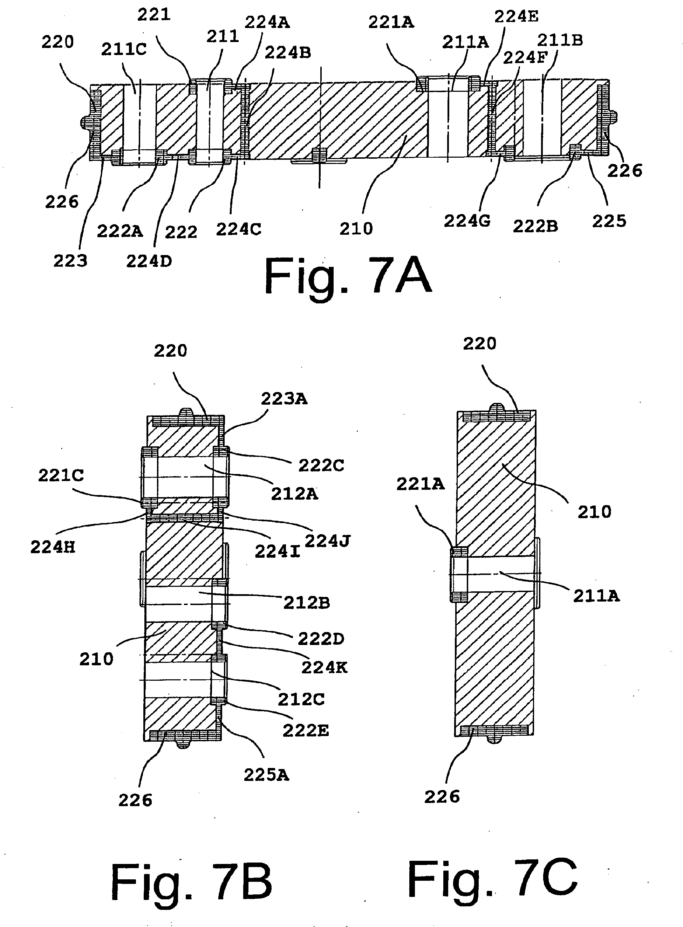

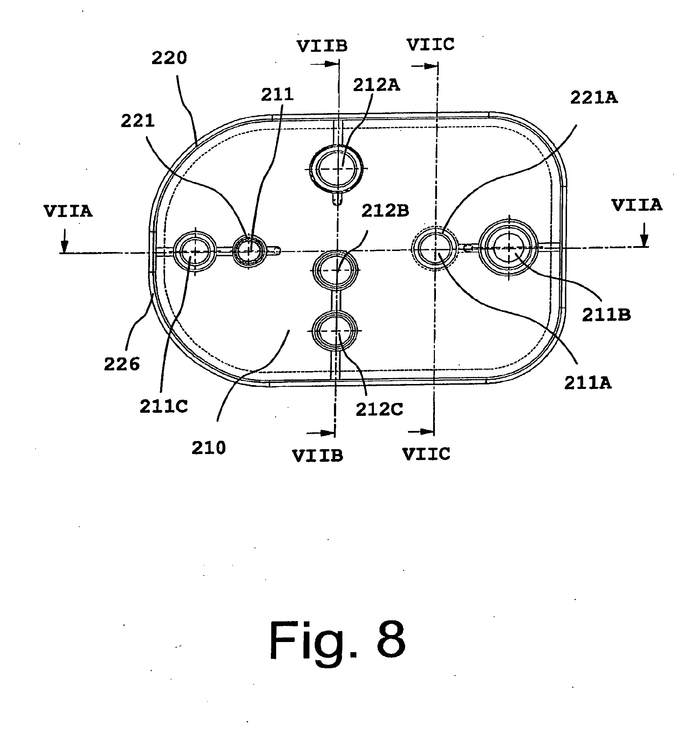

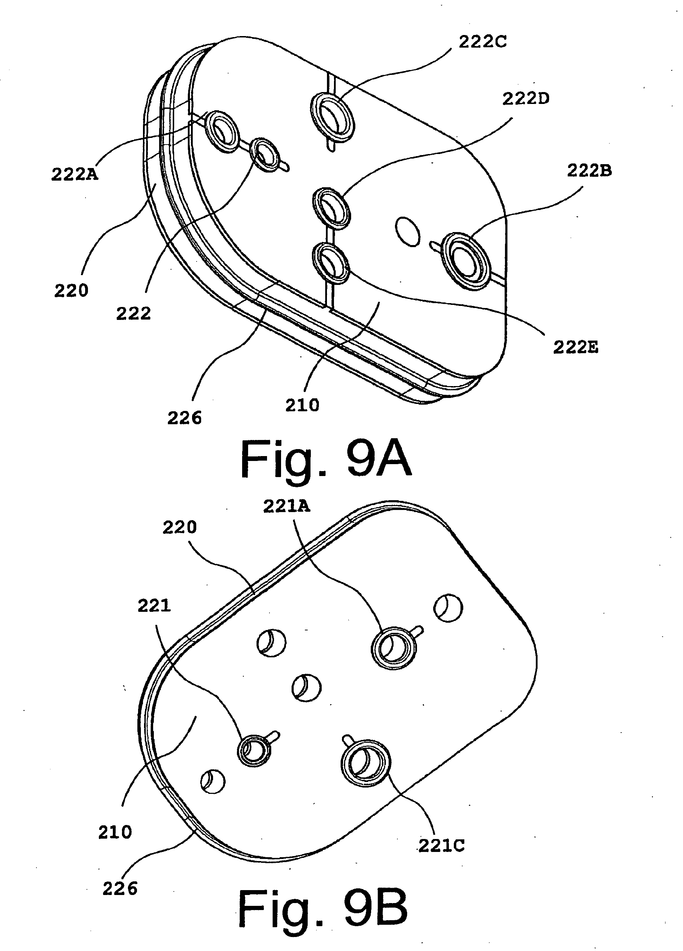

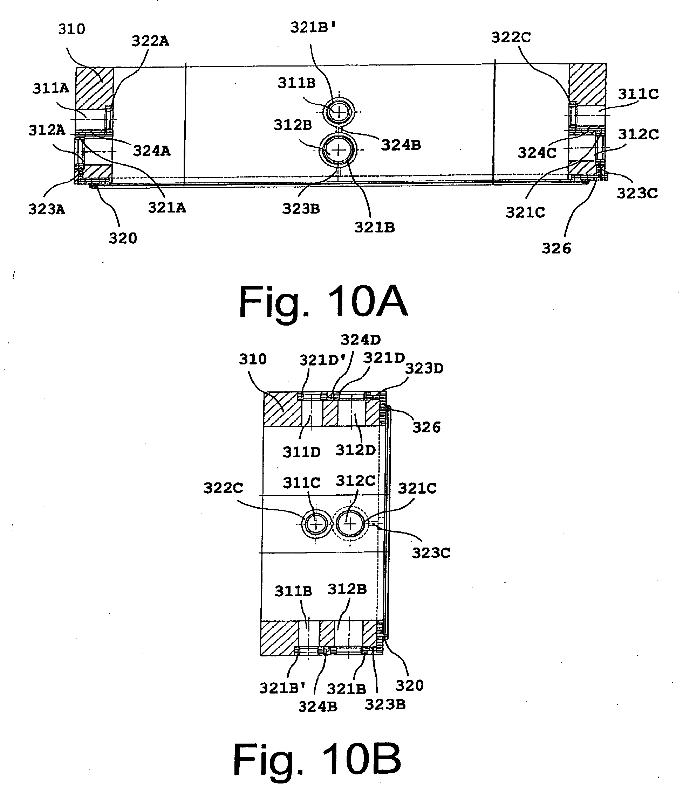

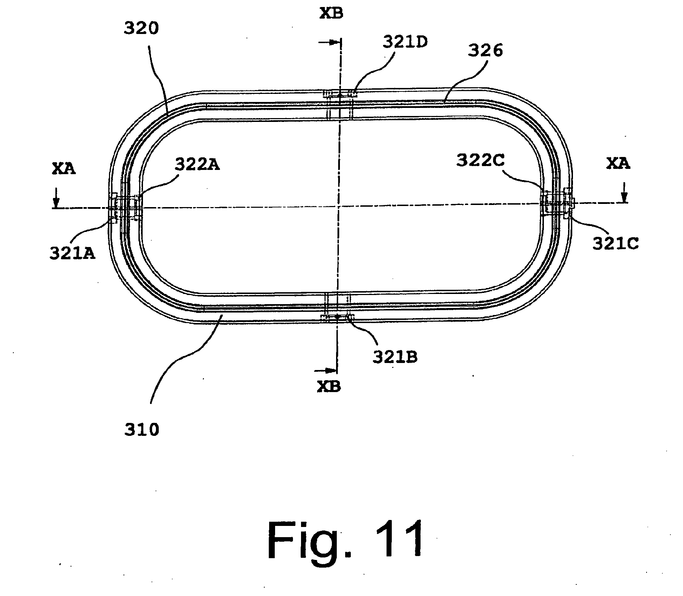

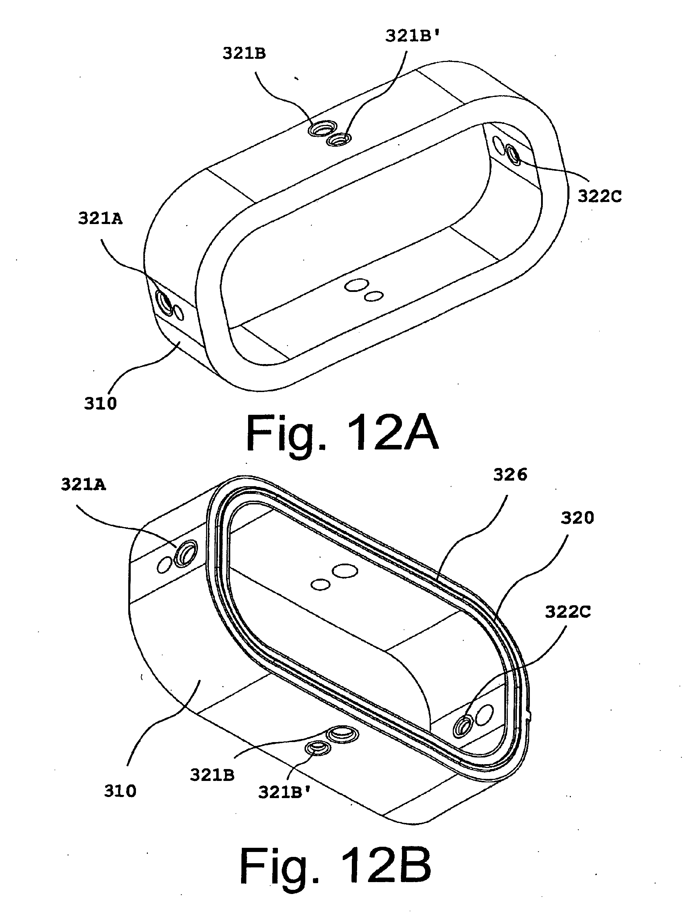

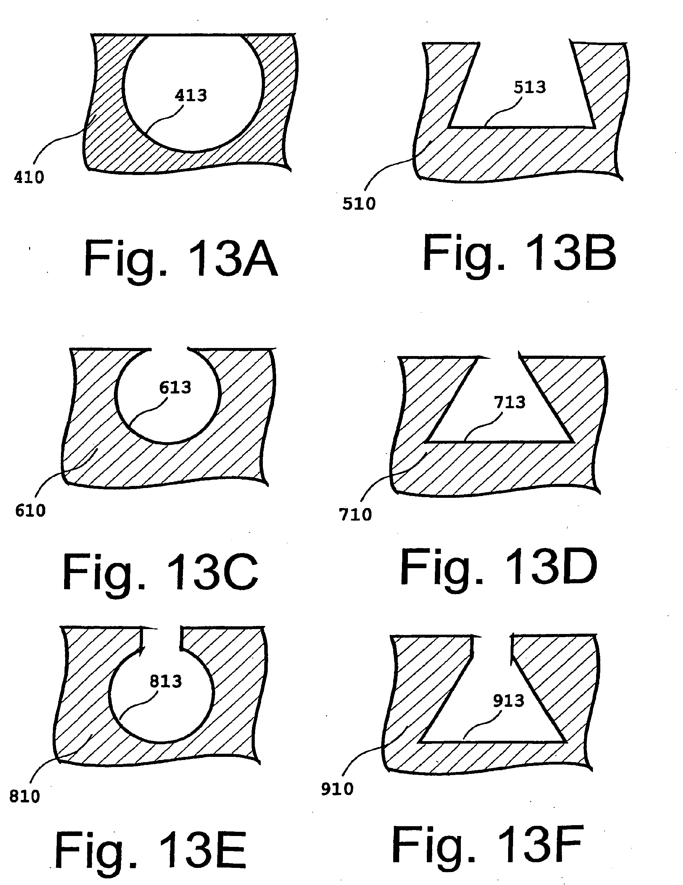

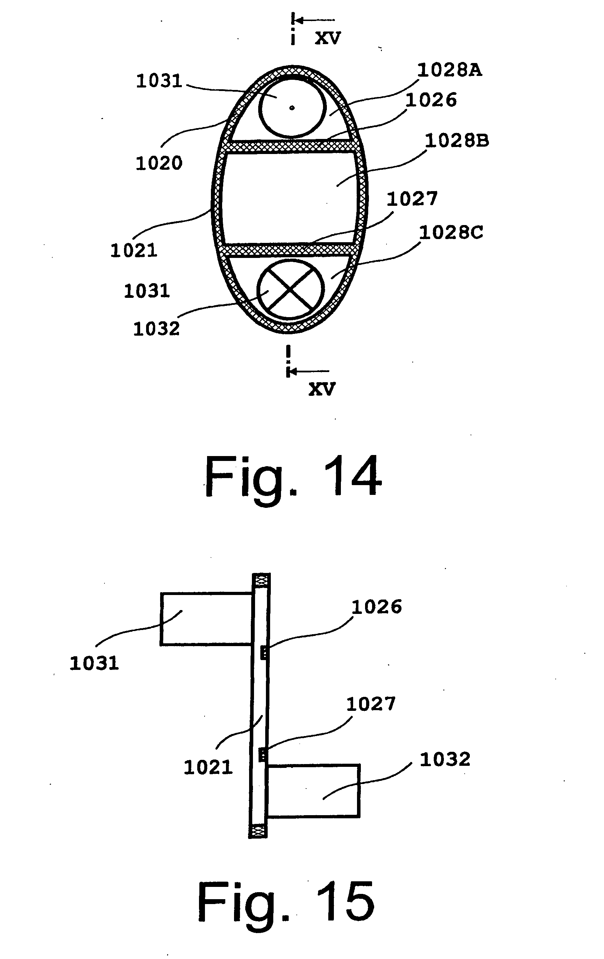

Bei den weiteren Ausführungsbeispielen werden für entsprechende Merkmale und Elemente, soweit nicht explizit aufgeführt, die gleichen (eventuell mit Zusätzen A, B, etc.) aber um jeweils 100 (Figuren 4 bis 6), 200 (Figuren 7A bis 9B), 300 (Figuren 10A bis 12B), 400 (Fig. 13A), 500 (Fig. 13B), 600 (Fig. 13C), 700 (Fig. 13D), 800 (Fig. 13E), 900 (Fig. 13F) bzw. 1000 (Figuren 14 bis 15) erhöhte Bezugszeichen verwendet.

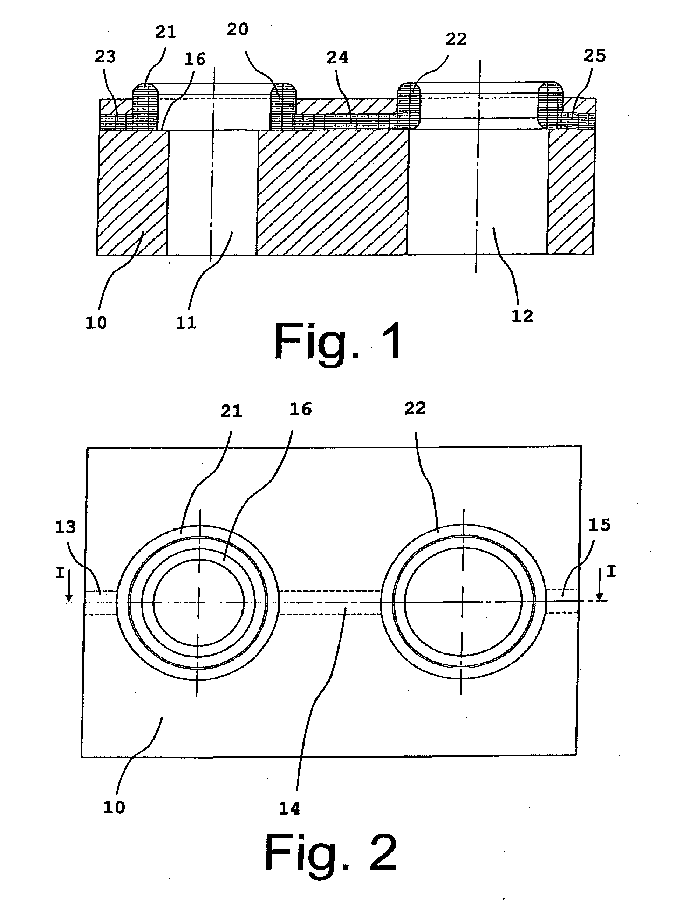

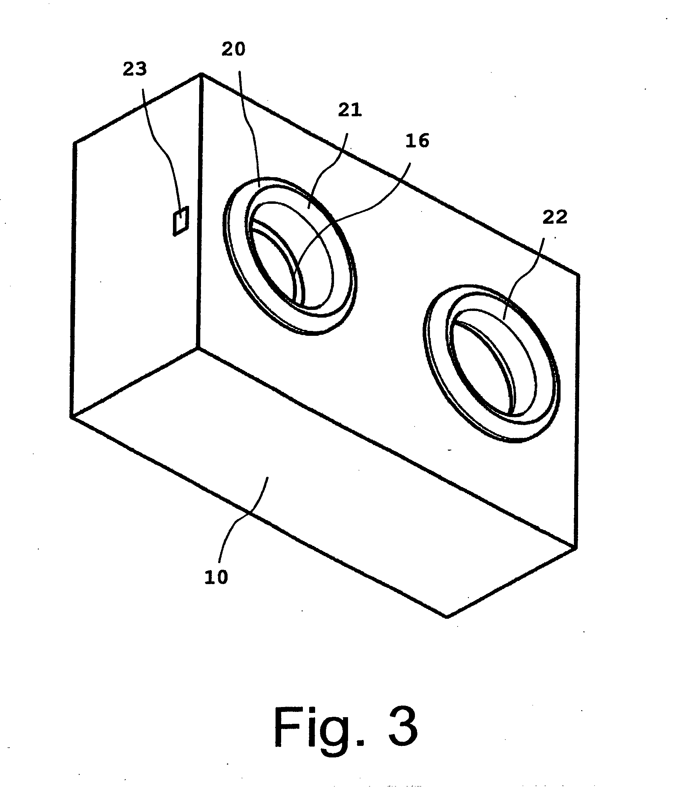

Die Figuren 1 bis 3 zeigen ein Bauteil 10 gemäß einer ersten Ausführung der Erfindung.

Das Bauteil 10 weist zwei Fluidkanäle 11, 12 auf. Auf der oberen Seite des Bauteils 10 ist Dichtungsmaterial 20 vorgesehen, mittels dem zwei Dichtungen 21, 22 ausgebildet sind, die zur Abdichtung jeweils einer der oberen Öffnungen der beiden Fluidkanäle vorgesehen- sind. Die Abdichtung erfolgt, wenn das Bauteil mittels nicht dargestellter Verbindungsmittel mit einem weiteren Bauteil verbunden wird. Beispielsweise kann das Bauteil gegen ein weiteres Bauteil (nicht gezeigt) verspannt werden. Andere dem Fachmann bekannte Verbindungsmittel sind denkbar.

Auf der anderen Seite kann ebenfalls Dichtungsmaterial vorgesehen sein, das entsprechend der Oberseite Dichtungen um die jeweiligen unteren Fluidkanalöffnungen ausbildet. Die Unterseite ist nur schematisch dargestellt.

Beispielsweise können auf der Ober- und/oder Unterseite andere dem Fachmann bekannte Anschlussmittel zur Verbindung von separaten Leitungen (nicht gezeigt) oder in einem weiteren Bauteil integrierten Leitungen (nicht gezeigt) mit den Fluidkanälen vorgesehen werden.

In dem Bauteil erstreckt sich seitlich von der Dichtung 21 unterhalb der Oberfläche des Bauteils 10 ein Dichtungsmaterialkanal 13, der an der Seite des Bauteils endet. Der Dichtungsmaterialkanal 13 ist mit einem Dichtungsmaterialsteg 23 gefüllt, der einstückig mit der Dichtung 21 verbunden ist.

Entsprechend ist auf der anderen Seite ein Dichtungsmaterialkanal 15 vorgesehen, der einen Dichtungsmaterialsteg 25 aufnimmt, der mit der Dichtung 22 einstückig verbunden ist.

Es ergibt sich der Vorteil, dass eine visuelle Kontrolle erfolgen kann, dass der Dichtungsmaterialsteg 23 bzw. 25 vollständig gebildet ist, wenn an der Seite des Bauteils 10 am Ende des Dichtungsmaterialkanals 13 bzw. 25 Dichtungsmaterial 20 zu sehen ist.

Zwischen den beiden Dichtungen 21, 22 ist ein Dichtungsmaterialkanal 14 vorgesehen, der einen Dichtungsmaterialsteg 24 aufnimmt, der mit den beiden Dichtungen 21, 22 an jeweils einem Ende einstückig verbunden ist.

Bei der Dichtung 21 ist eine Stufe 16 vorgesehen, während die Dichtung 22 über den Rand der Öffnung des Fluidkanals 12 vorsteht. Selbstverständlich können die beiden Fluidkanäle jeweils mit oder ohne Stufe ausgebildet sein.

Bei dem in den Figuren 1 bis 3 gezeigten Ausführungebeispiel sind die auf der einen Seite des Bauteils 10 vorgesehenen Dichtungen 21, 22 durch die drei Dichtungsmaterialstege 23, 24, 25, die in den jeweilgen Dichtungsmaterialkanälen 13, 14, 15 angeordnet sind, formschlüssig in dem Bauteil gesichert. Eine visuelle Kontrolle der richtigen Anordnung des Dichtungsmaterials kann durch Kontrolle der Enden der Dichtungsmaterialstege 23 bzw. 25 erfolgen.

Die Figuren 4 bis 6 zeigen ein Bauteil 110 gemäß einer zweiten Ausführung der Erfindung.

Auf der ersten Ausführung entsprechende Komponenten wird mit um 100 erhöhten Bezugszeichen Bezug genommen. In Ergänzung zu der folgenden Beschreibung wird auf die obige Beschreibung der ersten Ausführung der Erfindung verwiesen.

Das Bauteil 110 weist einen Fluidkanal 111 auf. Auf der oberen und unteren Seite des Bauteils 110 ist Dichtungsmaterial 20 vorgesehen, mittels dem zwei Dichtungen 21, 22 ausgebildet sind, die zur Abdichtung jeweils einer Öffnung des Fluidkanals 111 vorgesehen sind. Die Abdichtung erfolgt, wenn das Bauteil mittels nicht dargestellter Verbindungsmittel mit jeweils einem weiteren Bauteil verbunden wird. Beispielsweise kann das Bauteil 110 auf beiden Seiten gegen weitere Bauteile (nicht gezeigt) verspannt werden. Andere dem Fachmann bekannte Verbindungsmittel sind denkbar.

Beispielsweise können auf der Ober- und/oder Unterseite andere dem Fachmann bekannte Anschlussmittel zur Verbindung von separaten Leitungen (nicht gezeigt) oder in einem weiteren Bauteil integrierten Leitungen (nicht gezeigt) mit den Fluidkanälen vorgesehen werden.

In dem Bauteil erstreckt sich seitlich von der Dichtung 121 an der Oberfläche des Bauteils 110 ein Dichtungsmaterial-' kanal 113, der an der Seite des Bauteils endet. Der Dichtungsmaterialkanal 113 ist mit einem Dichtungsmaterialsteg 123 gefüllt, der einstückig mit der Dichtung 121 verbunden ist.

In dem Bauteil erstreckt sich seitlich von der Dichtung 122 an der Oberfläche ein Dichtungsmaterialkanal 113, der an der Seite des Bauteils endet. Der Dichtungsmaterialkanal 113 ist mit einem Dichtungsmaterialsteg 123 gefüllt, der einstückig mit der Dichtung 121 verbunden ist.

Auf der anderen Seite des Bauteils 110 ist ein Dichtungsmaterialkanal 115 vorgesehen, der einen Dichtungsmaterialsteg 125 aufnimmt, der mit der Dichtung 122 einstückig verbunden ist. Bei der dargestellten Ausführung verläuft der Dichtungsmaterialsteg 125 in die entgegengesetzte Richtung zu dem Dichtungsmaterialsteg 123.

Von der Oberseite des Bauteils 110 zu der Unterseite des Bauteils 110 verläuft ein Dichtungsmaterialkanal 114A, der in einen Dichtungsmaterialkanal 114B übergeht, der parallel zu dem Dichtungsmaterialkanal 113 verläuft. In den Dichtungsmaterialkanälen 114A und 114B sind Dichtungsmaterialstege 124A, 124B vorgesehen, die den Dichtungsmaterialsteg 123 mit der Dichtung 122 einstückig verbinden. Durch die einstückige Verbindung der Dichtung 121 mit der Dichtung 122 (Dichtungsmaterialstege 123, 124A und 124B) erfolgt eine formschlüssige Sicherung der beiden miteinander über die Dichtungsmaterialstege 123, 124A und 124B verbundenen Dichtungen 121 und 122 an dem Bauteil 110.

Der Dichtungsmaterialkanal 124A bzw. der Dichtungsmaterialsteg 124 weist einen runden Querschnitt auf. Andere dem Fachmann geläufige Querschnittsformen sind denkbar. Beispielsweise kann der Querschnitt krummlinig, eiförmig, oval, ellipsenförmig oder rechteckig sein.

Es ist klar, dass sich der Dichtungsmaterialsteg 123 und der entsprechende Dichtungsmaterialkanal 113 nur bis zu dem Dichtungsmaterialsteg 124A erstrecken kann. Weiterhin können beispielsweise der Dichtungsmaterialsteg 125 und der entsprechende Dichtungsmaterialkanal 115 weggelassen werden.

Bei dem Fluidkanal 111 und den Dichtungen 121 bzw. 122 sind die Abmessungen derart gewählt, dass die Dichtungen 121 bzw. 122 an ihrer Innenseite bündig mit dem Fluidkanal 111 abschließen. Selbstverständlich kann entsprechend der ersten Ausführung der Erfindung auch eine Stufe oder ein Rücksprung an der Ober- und/oder Unterseite des Bauteils 110 vorgesehen werden.

Bei der zweiten Ausführung der Erfindung ergibt sich wie bei der ersten Ausführung der Erfindung der Vorteil, dass eine visuelle Kontrolle erfolgen kann, dass der Dichtungsmaterialsteg 123 bzw. 125 vollständig ausgebildet ist, wenn entlang des Verlaufs des Dichtungsmaterialkanals 113 bzw. 115 an der Oberfläche des Bauteils 110 Dichtungsmaterial 120 zu sehen ist.

Bei der in den Figuren 4 bis 6 gezeigten Ausführung der Erfindung ist die Querschnittsform der Dichtungsmaterialkanäle 113, 114B bzw. 115 bzw. der Dichtungsmaterialstege 123, 124B bzw. 125 im wesentlichen trapezförmig. Alternative Querschnittsformen sind denkbar. Vorzugsweise ist die Querschnittsform derart gewählt, dass ein Formschluss zwischen dem Dichtungsmaterial 120 und dem Bauteil 110 (zusätzlich zu dem Formschluss durch den Dichtungsmaterialsteg 124A) erfolgt. Beispielsweise kann eine oder mehrere der Querschnittsformen entsprechend der in den Figuren 13A bis 13F gezeigten Varianten für eine mögliche Querschnittsform eines an der Oberfläche des Bauteils verlaufenden Dichtungsmaterialkanals für erfindungsgemäße Bauteile ausgebildet sein.

Gemäß Fig. 13A bzw. 13C kann der Querschnitt eines an der Oberfläche eines Bauteils 410 bzw. 610 verlaufenden Dichtungsmaterialkanals 413 bzw. 613 im wesentlichen kreissegmentförmig sein.

Gemäß Fig. 13B bzw. 13D kann der Querschnitt eines an der Oberfläche eines Bauteils 510 bzw. 710 verlaufenden Dichtungsmaterialkanals 513 bzw. 713 im wesentlichen trapezförmig sein, derart, dass die kleine Seite an der Oberfläche angeordnet ist.

Bei den Ausführungen gemäß Fig. 13C oder 13D erfolgt ein stärkerer Formschluss, weil die Öffnung des Dichtungsmaterialkanals 613 bzw. 713 wesentlich kleiner als der größte Durchmesser des Dichtungsmaterialkanals 613 bzw. 713 ist.

Gemäß Fig. 13E bzw. 13F kann der Querschnitt eines an der Oberfläche eines Bauteils 810 bzw. 910 verlaufenden Dichtungsmaterialkanals 813 bzw. 913 entsprechend der Ausführungen der Fig. 13A bis 13D mit einem im wesentlichen rechteckigen sich bis zur Oberfläche erstreckenden Fortsatz sein.

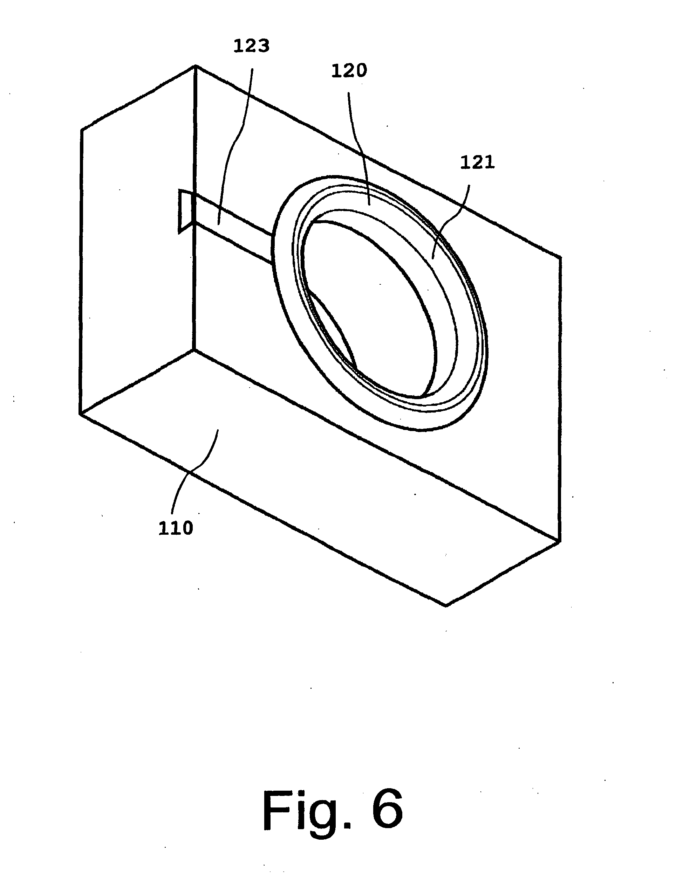

Alternativ zu der in Fig. 6 gezeigten Querschnittsform könnte auch eine andere Querschnittsform gewählt werden, die keinen Formschluss bewirkt, solange der Formschluss durch zumindest einen anderen Dichtungsmaterialsteg gewährleistet ist, wie beispielsweise die einstückige Verbindung der an gegenüberliegenden Seiten des Bauteils angeordneten Dichtungen 121 und 122 durch die Dichtungsmaterialstege 123, 124A und 124B.

Um eine noch stärkere Sicherung durch Formschluss zu erhalten, ist es denkbar, die beiden Dichtungen 121 und 122 zusätzlich durch eine oder mehrere weitere Dichtungsmaterialstegverbindungen einstückig miteinander zu verbinden. Diese können vorzugsweise der Dichtungsmaterialstegverbindung durch die Dichtungsmaterialstege 123, 124A und 124B im wesentlichen entsprechen.

Alternative formschlüssige Verbindungen Sicherungen sind denkbar. Beispielsweise könnte innerhalb des Bauteils ein Dichtungsmaterialring vorgesehen sein, der über einen oder vorzugsweise mehrere Dichtungsmaterialstege mit einer formschlüssig zu sicherenden Dichtung einstückig verbunden ist. Mit diesem innerhalb des Bauteils vorgesehenen Dichtungsmaterialring könnten beispielsweise an gegenüberliegenden Seiten des Bauteils auch mehrere Dichtungen über entsprechende Dichtungsmaterialstege einstückig verbunden sein. Bei der Ausführung der Figuren 4 bis 6 könnte der Dichtungsmaterialring beispielsweise zwischen den beiden Dichtungen 121 und 122 vorgesehen werden, und mit beiden Dichtungen über entsprechende Dichtungsmaterialstege verbunden sein. Beispielsweise könnte eine Dichtung in einem Bauteil auch durch einen oder mehrere Dichtungsmaterialstege formschlüssig gesichert sein, der bzw. die von einer Stelle der Dichtung in das Bauteil hinein zu einer anderen Stelle der Dichtung verläuft bzw. verlaufen.

Wie bei den gezeigten Ausführungen ist es auch bei den alternativen Ausführungen fertigungstechnisch vorteilhaft, die Dichtungsmaterialstege jeweils seitlich in eine Dichtung münden zu lassen, damit bei dem Anformen der Dichtung an das Bauteil eine gute Ausbildung der Dichtung an dem Bauteil gewährleistet ist.

Alle oben genannten Alternativen gelten selbstverständlich für alle in dieser Beschreibung genannten Ausführungen der Erfindung. Es liegt in der Fertigkeit des Durchschnittsfachmanns, die explizit gezeigten Ausführungen der Erfindung entsprechend auszubilden und gegebenenfalls anzupassen.

Die Figuren 7A bis 9B zeigen ein Bauteil 210 gemäß einer dritten Ausführung der Erfindung.

Auf der ersten oder zweiten Ausführung entsprechende Komponenten wird mit um 200 bzw. 100 erhöhten Bezugszeichen Bezug genommen. In Ergänzung zu der folgenden Beschreibung wird auf die obige Beschreibung der ersten bzw. zweiten Ausführung der Erfindung verwiesen.

Das Bauteil 210 weist mehrere Fluidkanäle 211, 211A, 211B, 211C, 212A, 212B und 212C auf. Dichtungen 221, 221A und 221C sind auf der einen Seite des Bauteils vorgesehen. Auf der anderen Seite des Bauteils sind mehrere Dichtungen 222, 222A, 222B, 222C, 222D und 222E vorgesehen.

Entsprechend der ersten Ausführung sind die Dichtungen 222 und 222A mittels eines Dichtungsmaterialstegs 224D und die Dichtungen 222D und 222E mittels eines Dichtungsmaterialstegs 224K jeweils einstückig miteinander verbunden. Im Gegensatz zu der ersten Ausführung verlaufen die Dichtungsmaterialstege 224D und 224K nicht unterhalb der Oberfläche. Selbstverständlich können die Dichtungsmaterialstege 224D und/oder 224K auch unterhalb der Oberfläche verlaufen. Weiterhin können sie vorteilhafterweise einen Querschnitt entsprechend einer der Figuren 6 bzw. 13A bis 13F oder einen anderen entsprechenden Querschnitt aufweisen, der eine formschlüssige Verbindung des Dichtungsmaterials und damit der Dichtungen mit dem Bauteil 210 schafft.

Entsprechend der zweiten Ausführung sind die Dichtungen 221 und 222 über die Dichtungsmaterialstege 224A, 224B und 224C und die Dichtungen 221C und 222C über die Dichtungsmaterialstege 224H, 224I und 224J jeweils einstückig miteinander verbunden.

Um das Bauteil 210 verläuft eine umlaufende Dichtung 226, die über den Dichtungsmaterialsteg 223 mit der Dichtung 222A, über den Dichtungsmaterialsteg 225 mit der Dichtung 222B, über den Dichtungsmaterialsteg 223A mit der Dichtung 222C und über den Dichtungsmaterialsteg 225A mit der Dichtung 222E einstückig verbunden ist. Die Dichtungsmaterialstege 223, 223A, 225 und/oder 225a können die oben genannten Querschnittsformen aufweisen und/oder unterhalb der Oberfläche verlaufen.

Insgesamt ergibt sich eine fromschlüssige Verbindung des Dichtungsmaterials mit dem Bauteil. Zusätzlich kann wie bei allen Ausführungen der Erfindung durch die Anformung eine Haftwirkung bereitgestellt werden.

Die Figuren 10A bis 12B zeigen ein Bauteil 310 gemäß einer vierten Ausführung der Erfindung.

Im Gegensatz zu den vorherigen drei Ausführungsbeispielen ist das Bauteil 310 ringförmig ausgebildet, wobei die Fluidkanäle durch die Ringwandung hindurch verlaufen.

Auf der ersten, zweiten oder dritten Ausführung entsprechende Komponenten wird mit um 300, 200 bzw. 100 erhöhten Bezugszeichen Bezug genommen. In Ergänzung zu der folgenden Beschreibung wird auf die obige Beschreibung der ersten, zweiten bzw. dritten Ausführung der Erfindung verwiesen.

Das Bauteil 310 weist mehrere Fluidkanäle 311A, 312A, 311B, 312B, 311C, 312C, 311D und 312D auf. Die Fluidkanäle sind jeweils paarweise über den Ring des Bauteils im wesentlichen gleichmäßig verteilt. Bei den vier Paaren ergibt sich ein Winkelabstand zwischen benachbarten Paaren von etwa 90°.

Dichtungen 321A, 321B, 321B', 321C, 321D und 321D' sind auf der Aussenseite des Rings des Bauteils an den Öffnungen der entsprechenden Fluidkanäle 312A, 312B, 311B, 312C, 312B bzw. 311B vorgesehen. Auf der Innenseite des Rings des Bauteils 310 sind Dichtungen 322A und 322C an den Öffnungen der entsprechenden Fluidkanäle 311A bzw. 311C vorgesehen.

Entsprechend der ersten Ausführung sind die Dichtungen 321B und 321B' mittels eines Dichtungsmaterialstegs 324B und die Dichtungen 321D und 321D' mittels eines Dichtungsmaterialstegs 324D jeweils einstückig miteinander verbunden. Entsprechend der ersten Ausführung verlaufen die Dichtungsmaterialstege 324B und 324D unterhalb der Oberfläche. Selbstverständlich können die Dichtungsmaterialstege 324B und/oder 324D auch an der Oberfläche verlaufen. Vorzugsweise haben sie dann einen Querschnitt, der eine formschlüssige Verbindung zwischen dem Dichtungsmaterialsteg und dem Bauteil schafft. Beispielsweise können sie einen Querschnitt entsprechend einer der Figuren 6 bzw. 13A bis 13F oder einen anderen entsprechenden Querschnitt aufweisen, der eine formschlüssige Verbindung des Dichtungsmaterials und damit der Dichtungen mit dem Bauteil 310 schafft.

Entsprechend der zweiten Ausführung sind die Dichtungen 321A und 322A bzw. 321C und 322C über jeweils einen Dichtungsmaterialsteg 324A bzw. 324C jeweils einstückig miteinander verbunden.

Auf der Unterseite des Ring des Bauteils 310 verläuft eine umlaufende Dichtung 326, die über den Dichtungsmaterialsteg 323A mit der Dichtung 321A, über den Dichtungsmaterialsteg 323B mit der Dichtung 321B, über den Dichtungsmaterialsteg 323C mit der Dichtung 321C und über den Dichtungsmaterialsteg 323D mit der Dichtung 312D einstückig verbunden ist. Die Dichtungsmaterialstege 323A, 323B, 323C und 323D verlaufen unterhalb der Oberfläche des Bauteils 310. Die Dichtungsmaterialstege 323A, 323B, 323C und/oder 323D können auch an der Oberfläche verlaufen und eine Querschnittsform aufweisen, die eine formschlüssige Verbindung zwischen dem Dichtungsmaterialsteg und dem Bauteil schafft. Beispeilsweise können sie die oben genannten Querschnittsformen der Figuren 6 bzw. 13A bis 13F aufweisen und/oder unterhalb der Oberfläche verlaufen.

Insgesamt ergibt sich eine fromschlüssige Verbindung des Dichtungsmaterials mit dem Bauteil. Zusätzlich kann wie bei allen Ausführungen der Erfindung durch die Anformung eine Haftwirkung bereitgestellt werden.

Die Figuren 14 und 15 zeigen eine Aufsicht bzw. eine Querschnittsansicht eines erfindungsgemäßen Dichtungselements für ein Bauteil gemäß der Erfindung.

Die Dichtung 1021 ist aus Dichtungsmaterial ausgebildet und weist einen umlaufenden Dichtungsring auf. Die Dichtung 1021 weist einen Dichtungsabschnitt 1028A auf, in dem eine Öffnung eines Fluidkanals 1031 angeordnet ist, der in einem ersten Bauteil verläuft. Auf der gegenüberliegenden Seite weist die Dichtung 1021 einen Dichtungsabschnitt 1028C auf, in dem eine Öffnung eines Fluidkanals 1032 angeordnet ist, der in einem zweiten Bauteil verläuft. Die beiden Bauteile sind der Übersicht halber nicht dargestellt und die Fluidkanäle sind nur schematisch angedeutet. Es ist klar, dass auch jeweils mehrere Fluidkanäle vorgesehen sein können. Die Fluidkanäle sind zu einander versetzt, so dass die Dichtung 1021 zwischen den beiden Bauteilen einen Fluidkanal zur Verbindung der Öffnungen der beiden Fluidkanäle 1031, 1032 bildet. Dieser Verbindungskanal ist in einem Dichtungsabschnitt 1028B gebildet.

Damit ein Verengen des Dichtungsabschnitts 1028B und somit des die Öffnungen der Fluidkanäle 1031, 1032 verbindenden Fluidkanals verhindert wird, sind zwei Versteifungsstege 1026, 1027 vorgesehen. Die beiden Versteifungsstege haben einen im wesentlichen rechteckigen Querschnitt. Selbstverständlich können auch andere dem Fachmann bekannte Querschnittsformen verwendet werden.

Die Höhe der Versteifungsstege 1026, 1027 beträgt ungefähr ein Viertel bzw. 30% der Höhe des Dichtungsrings. Bevorzugte Grenzen sind in den Ansprüchen und der Beschreibung angegeben. Anstelle einer Relation der Höhe der Versteifungsstege zu der Höhe der Dichtung kann auch eine Relation zu dem Abstand zwischen den beiden Bauteilen angegeben werden. Ein bevorzugter Wert für die Höhe der Versteifungsstege beträgt beispielsweise ungefähr 30% der Höhe der Dichtung. Das kann beispielsweise etwa 50% des Abstands zwischen den beiden Bauteilen entsprechen.

## Patentansprüche

1. Bauteil (10) mit zumindest zwei angeformten Dichtungen (21, 22), wobei das Bauteil (10) und die angeformte Dichtung (21, 22) derart ausgebildet sind, dass die angeformte Dichtung (21, 22) formschlüssig an dem Bauteil (10) befestigt ist, wobei die zumindest zwei angeformten Dichtungen (21, 22) durch zumindest einen Dichtungamaterialkanal (13, 14, 15) oder mehrere Dichtungsmaterialkanäle (13, 14, 15) miteinander verbunden sind,
**wobei** zumindest zwei der angeformten Dichtungen (21, 22) auf der gleichen Seite des Bauteils (10) angeordnet sind.

2. Bauteil (10) nach Anspruch 1, wobei sich der Dichtungsmaterialkanal (13, 14, 15) bzw. zumindest einer oder einige der Dichtungsmaterialkanäle (13, 14, 15) entlang der Oberfläche des Bauteils (10) erstrecken.

3. Bauteil (10) nach Anspruch 2, wobei der sich entlang der Oberfläche des Bauteils (10) erstreckende Dichtungsmaterialkanal (13, 14, 15) unterhalb der Oberfläche des Bauteils (10) verläuft bzw. zumindest einer oder einige der sich entlang der Oberfläche des Bauteils (10) erstreckenden Dichtungsmaterialkanäle (13, 14, 15) unterhalb der Oberfläche des Bauteils (10) verlaufen.

4. Bauteil (10) nach einem der vorhergehenden Ansprüche, wobei sich der Dichtungsmaterialkanal (13, 14, 15) bzw. zumindest einer der Dichtungsmaterialkanäle (13, 14, 15) von der Dichtung (21, 22) weg erstreckt und Dichtungsmaterial (20) enthält, das mit der Dichtung (21, 22) einstückig verbunden ist.

5. Bauteil (10) nach einem der vorhergehenden Ansprüche, wobei das Bauteil (10) mehrere und vorzugsweise zwei Dichtungsmaterialkanäle (13, 14, 15) aufweist, die sich von einer Dichtung (21, 22) weg erstrecken und Dichtungsmaterial (20) enthalten, das mit der Dichtung (21, 22) einstückig verbunden ist.

6. Bauteil (10) nach Anspruch 5, wobei sich die Dichtungmaterialkanäle (13, 14, 15) in im wesentlichen entgegengesetzte Richtungen erstrecken.

7. Bauteil (10) nach einem der Ansprüche 4 bis 6, wobei sich der bzw. die Dichtungsmaterialkanäle (13, 14, 15) im wesentlichen und vorzugsweise vollständig innerhalb des Bauteils (10) erstrecken.

8. Bauteil (10) nach einem der vorhergehenden Ansprüche, wobei sich der Dichtungsmaterialkanal (13, 14, 15) bzw. zumindest einer oder einige der Dichtungsmaterialkanäle (13, 14, 15) zumindest zu einer Seite des Bauteils öffnen.

9. Bauteil (10) nach einem der vorhergehenden Ansprüche, wobei sich der Dichtungsmaterialkanal (13, 14, 15) bzw. zumindest einer oder einige der Dichtungsmaterialkanäle von der Dichtung (21, 22) in das Bauteil (10) erstrecken.

10. Bauteil (10) nach einem der Ansprüche 2 bis 9 in Anhängigkeit von Anspruch 2, wobei der sich entlang der Oberfläche des Bauteils erstreckende Dichtungsmaterialkanal (13, 14, 15) zumindest teilweise bis zu der Oberfläche des Bauteils erstreckt, wobei die Breite des Dichtungsmaterialkanals (13, 14, 15) an der Oberfläche des Bauteils kleiner als die größte Breite des Dichtungsmaterialkanals (13, 14, 15) ist.

11. Bauteil (10) nach Anspruch 10, wobei die Breite des Dichtungsmaterialkanals (13, 14, 15) an der Oberfläche des Bauteils weniger als 90%, vorzugsweise weniger als 70%, weiter vorzugsweise weniger als 50%, weiter vorzugsweise weniger als 30%, und bevorzugt ungefähr 10% der größten Breite des Dichtungsmaterialkanals (13, 14, 15) beträgt.

12. Bauteil (10) nach einem der Ansprüche 10 bis 11, wobei die Breite des Dichtungsmaterialkanals (13, 14, 15) an der Oberfläche des Bauteils mehr als 10%, vorzugsweise mehr als 20%, weiter vorzugsweise mehr als 30%, weiter vorzugsweise mehr als 40%, und bevorzugt ungefähr 50% der größten Breite des Dichtungsmaterialkanals (13, 14, 15) beträgt.

13. Bauteil (10) nach einem der vorhergehenden Ansprüche mit zumindest drei angeformten Dichtungen, wobei zumindest zwei der angeformten Dichtungen auf gegenüberliegenden seiten des Bauteile angeordnet sind.

14. Bauteil (10) nach Anspruch 13, wobei die gegenüberliegenden Seiten parallel zueinander verlaufen.

15. Bauteil (10) nach einem der vorhergehenden Ansprüche mit zumindest drei angeformten Dichtungen, wobei zumindest zwei der angeformten Dichtungen auf aneinandergrenzenden Seiten des Bauteils angeordnet sind.

16. Bauteil (10) nach Anspruch 15, wobei die aneinandergrenzenden Seiten senkrecht zueinander angeordnet sind.

17. Bauteil (10) nach einem der vorhergehenden Ansprüche, wobei die Dichtung(en) (jeweils) zumindest eine Fluidkanalöffnung des Bauteils (10) umschließt (umschließen).

18. Bauteil (10) nach einem der vorhergehenden Ansprüche, wobei das Bauteil aus einem steifen harten Material bzw. Hartkunststoff ausgebildet ist, vorzugsweise aus einem harten Thermoplast bzw. technischen Thermoplast (z.B. PA, PBT, PPS, PEEK usw.), bevorzugt aus PEEK (Polyetheretherketon), wobei weiter vorzugsweise Füllstoffe (z.B. GF, GK, CF usw.) und/oder Verstärkungsfasern (z.B. Glasfasern, Kohlefasern usw.) vorgesehen sind.

19. Bauteil (10) nach einem der vorhergehenden Ansprüche, wobei das Dichtungsmaterial (20) aus einem duroplasten Elastomer ausgebildet ist, vorzugsweise aus einem Kautschuk, bevorzugt aus HNBR, NBR, EPDM.

20. Bauteil (10) nach einem der Ansprüche 1 bis 19, wobei das Dichtungsmaterial (20) aus TPE, ACM, Silikon, Metall (beispielsweise Kupfer) oder Keramik ausgebildet ist.

21. Bauteil (10) nach einem der vorhergehenden Ansprüche, wobei die Dichtungen jeweils in einer Dichtungsnut, Vertiefung und/oder Aufnahme angeordnet sind.

22. Bauteil (10) nach einem der vorhergehenden Ansprüche, wobei zumindest eine Dichtung (21, 22) einen Dichtungsring zur Abdichtung zumindest einer Öffnung eines in dem Bauteil vorgesehenen Fluidkanals (11, 12) und zumindest einer damit zu verbindenden Öffnung eines in einem zweiten Bauteil vorgesehenen Fluidkanals (11, 12) aufweist, wobei die Dichtung (21, 22) zumindest einen Versteifungssteg (1027, 1028) aufweist, der zwei Stellen des Dichtungsrings miteinander verbindet.

23. Bauteil (10) nach Anspruch 22, wobei die Dichtung (21, 22) mehrere Versteifungsstege (1027, 1028) aufweist, die vorzugsweise im wesentlichen parallel zueinander verlaufen.

24. Bauteil (10) nach einem der Ansprüche 22 bis 23, wobei der bzw. die Versteifungsstege (1027, 1028) einen im wesentlichen rechteckigen Querschnitt aufweisen.

25. Bauteil (10) nach einem der Ansprüche 22 bis 24, wobei die Öffnungen der zu verbindenden Fluidkanäle (11, 12) zueinander versetzt sind.

26. Bauteil (10) nach einem der Ansprüche 22 bis 25, wobei die Öffnungen der zu verbindenden Fluidkanäle jeweils gegenüberliegenden Endabschnitten der Dichtung (21, 22) zugeordnet sind.

27. Bauteil (10) nach einem der Ansprüche 22 bis 26, wobei der bzw. die Versteifungsstege (1027, 1028) zwischen zwei Abschnitten der Dichtung (21, 22) angeordnet sind, die jeweils einer Öffnung der zu verbindenden Fluidkanäle zugeordnet sind.

28. Bauteil (10) nach einem der Ansprüche 22 bis 27, wobei der bzw. die Versteifungsstege (1027, 1028) im wesentlichen senkrecht zu einer gedachten Verbindungslinie zwischen den Öffnungen der zu verbindenden Fluidkanäle verlaufen.

29. Bauteil (10) nach einem der Ansprüche 22 bis 28, wobeider Dichtungsring der Dichtung (21, 22) bzw, die Dichtungsringe der Dichtungen (21, 22) jeweils einen runden, ovalen, ellipsenförmigen, eiförmigen, rechteckigen, wellenförmigen, quadratischen und/oder krummlinigen Querschnitt aufweisen.

30. Bauteil (10) nach einem der vorhergehenden Ansprüche, wobeider Dichtungsring der Dichtung (21, 22) bzw. die Dichtungsringe der Dichtungen (21, 22) jeweils eine runde, ovale, ellipsenförmige, eiförmige, wellenförmige, rechteckige, quadratische und/oder krummlinige Form aufweisen.

31. Bauteil (10) nach einem der vorhergehenden Ansprüche, wobeidie Höhe des bzw. der Versteifungsstege (1027, 1028) mindestens 5% des Höhe der Dichtung, vorzugsweise mindestens 10% des Höhe der Dichtung, insbesondere vorzugsweise mindestens 20% des Höhe der Dichtung, und bevorzugt ungefähr 30% der Höhe der Dichtung (21, 22) beträgt.

32. Bauteil (10) nach einem der vorhergehenden Ansprüche, wobeidie Höhe des bzw. der Versteifungsstege (1027, 1028) höchstens 70% des Höhe der Dichtung, vorzugsweise höchstens 50% des Höhe der Dichtung, insbesondere vorzugsweise höchstens 40% des Höhe der Dichtung, und bevorzugt ungefähr 30% der Höhe der Dichtung (21, 22) beträgt.

33. Verfahren zur Herstellung eines Bauteil (10) nach einem der vorhergehenden Ansprüche, **dadurch gekennzeichnet, dass** die Dichtungen durch Spritzpressen (Transfer-Moulding) oder Spritzgießen (Injection-Moulding) angeformt werden.

## Claims

1. Component (10) having at least two gaskets (21, 22) formed thereon, wherein the component (10) and the gasket (21, 22) formed thereon are made in such a way that the gasket (21, 22) formed thereon is attached to the component (10) in positive connection, wherein the at least two gaskets (21, 22) formed thereon are connected to one another by at least one gasket material channel (13, 14, 15) or a plurality of gasket material channels (13, 14, 15),
wherein at least two of the gaskets (21, 22) formed thereon are arranged on the same side of the component (10).

2. Component (10) according to claim 1, wherein the gasket material channel 13, 14, 15) or at least one or some of the gasket material channels (13, 14, 15) extend along the surface of the component (10).

3. Component (10) according to claim 2, wherein the gasket material channel (13, 14, 15) extending along the surface of the component (10) runs below the surface of the component (10) or at least one or some of the gasket material channels (13, 14, 15) extending along the surface of the component (10) run below the surface of the component (10).

4. Component (10) according to any of the preceding claims, wherein the gasket material channel (13, 14, 15) or at least one of the gasket material channels (13, 14, 15) extends away from the gasket (21, 22) and contains gasket material (20) which is connected to the gasket (21, 22) in integral fashion.

5. Component (10) according to any of the preceding claims, wherein the component (10) has a plurality and preferably two gasket material channels (13, 14, 15) which extend away from a gasket (21, 22) and contain gasket material (20) which is connected to the gasket (21, 22) in integral fashion.

6. Component (10) according to claim 5, wherein the gasket material channels (13, 14, 15) extend substantially in opposite directions.

7. Component (10) according to any of claims 4 to 6, wherein the gasket material channel or channels (13, 14, 15) extend substantially and preferably fully inside the component (10).

8. Component (10) according to any of the preceding claims, wherein the gasket material channel (13, 14, 15) or at least one or some of the gasket material channels (13, 14, 15) open to at least one side of the component.

9. Component (10) according to any of the preceding claims, wherein the gasket material channel (13, 14, 15) or at least one or some of the gasket material channels extend from the gasket (21, 22) into the component (10).

10. Component (10) according to any of claims 2 to 9 depending on claim 2, wherein the gasket material channel (13, 14, 15) extending along the surface of the component extends at least in part up to the surface of the component, wherein the width of the gasket material channel (13, 14, 15) on the surface of the component is smaller than the greatest width of the gasket material channel (13, 14, 15).

11. Component (10) according to claim 10, wherein the width of the gasket material channel (13, 14, 15) on the surface of the component is less than 90 %, preferably less than 70 %, more preferably less than 50 %, more preferably less than 30 % and preferably about 10 % of the greatest width of the gasket material channel (13, 14, 15).

12. Component (10) according to any of claims 10 to 11, wherein the width of the gasket material channel (13, 14, 15) on the surface of the component is more than 10 %, preferably more than 20 %, more preferably more than 30 %, more preferably more than 40 % and preferably about 50 % of the greatest width of the gasket material channel (13, 14, 15).

13. Component (10) according to any of the preceding claims, comprising at least three gaskets formed thereon, wherein at least two of the gaskets formed thereon are arranged on opposite sides of the component.

14. Component (10) according to claim 13, wherein the opposite sides run parallel to each ether.

15. Component (10) according to any of the preceding claims, comprising at least three gaskets formed thereon, wherein at least two of the gaskets formed thereon are arranged on adjoining sides of the component.

16. Component (10) according to claim 15, wherein the adjoining sides are arranged perpendicularly to each other.

17. Component (10) according to any of the preceding claims, wherein the gasket(s) surround(s) (in each case) at least one fluid channel opening of the component (10).

18. Component (10) according to any of the preceding claims, wherein the component is formed of the rigid hard material or rigid plastic material, preferably of a hard thermoplastics or technical thermoplastics (e.g. PA, PBT, PPS, PEEK, etc.), preferably of PEEK (poylethyer ether ketone, wherein fillers (e.g. GF, GK, CF, etc.) and/or reinforcing fibers (e.g. glass fibers, carbon fibers, etc.) are also preferably provided.

19. Component (10) according to any of the preceding claims, wherein the gasket material (20) is made of a duroplastic elastomer, preferably of a rubber, preferably of HNBR, NBR, EPDM.

20. Component (10) according to any of claims 1 to 19, wherein the gasket material (20) is made of TPE, ACM, silicone, metal (e.g. copper) or ceramics.

21. Component (10) according to any of the preceding claims, wherein the gaskets are arranged in each case in a gasket groove, recess and/or retainer.

22. Component (10) according to any of the preceding claims, wherein at least one gasket (21, 22) has a sealing ring for sealing at least one opening of a fluid channel (11 ,12) provided in the component and at least one opening of a fluid channel (11, 12) provided in a second component, wherein said latter opening is to be connected thereto, wherein the gasket (21, 22) has at least one reinforcing web (1027, 1028) which connects two points of the sealing ring to one another.

23. Component (10) according to claim 22, wherein the gasket (21, 22) has a plurality of reinforcing webs (1027, 1028) which preferably run substantially parallel to one another.

24. Component (10) according to any of claims 22 to 23, wherein the reinforcing web or webs (1027, 1028) have a substantially rectangular cross-section.

25. Component (10) according to any of claims 22 to 24, wherein the openings of the fluid channels (11, 12) to be connected are displaced relative to one another.

26. Component (10) according to any of claims 22 to 25, wherein the openings of the fluid channels to be connected are assigned in each case to opposite end portions of the gasket (21, 22).

27. Component (10) according to any of claims 22 to 26, wherein the reinforcing web or webs (1027, 1028) are arranged between two segments of the gasket (21, 22), each of which is assigned to an opening of the fluid channels to be connected.

28. Component (10) according to any of claims 22 to 27, wherein the reinforcing web or webs (1027, 1028) extend substantially perpendicularly to an imaginary connecting line between the openings of the fluid channels to be connected.

29. Component (10) according to any of claims 22 to 28, wherein the sealing ring of the gasket (21, 22) or the sealing rings of the gaskets (21, 22) in each case have a round, oval, elliptical, oviform, rectangular, wave-like, square and/or curvilinear cross-section.

30. Component (10) according to any of the preceding claims, wherein the sealing ring of the gasket (21, 22) or the sealing rings of the gaskets (21, 22) in each case have a round, oval, elliptical, oviform, wave-like, rectangular, square and/or curvilinear shape.

31. Component (10) according to any of the preceding claims, wherein the height of the reinforcing web or webs (1027, 1028) is at least 5 % of the height of the gasket, preferably at least 10 % of the height of the gasket, in particular preferably at least 20 % of the height of the gasket and preferably approximately 30 % of the height of the gasket (21, 22).

32. Component (10) according to any of the preceding claims, wherein the height of the reinforcing web or webs (1027, 1028) is at most 70 % of the height of the gasket, preferably at most 50 % of the height of the gasket, in particular preferably at most 40 % of the height of the gasket and preferably approximately 30 % of the height of the gasket (21, 22).

33. A method for producing a component (10) according to any of the preceding claims, **characterized in that** the gaskets are attached by forming using transfer molding or injection molding.

## Revendications

1. Composant (10) comprenant au moins deux joints conformés (21, 22), ledit composant (10) et le joint conformé (21, 22) étant réalisés de telle manière que le joint conformé (21, 22) est fixé en coopération de formes sur le composant (10), dans lequel lesdits au moins deux joints conformés (21, 22) sont reliés l'un à l'autre/les uns aux autres par au moins un canal pour matériau de joint (13, 14, 15) ou par plusieurs canaux pour matériau de joint (13, 14, 15),
dans lequel au moins deux des joints conformés (21, 22) sont agencés du même côté du composant (10).

2. Composant (10) selon la revendication 1, dans lequel le canal pour matériau de joint (13, 14, 15), ou respectivement au moins un ou quelques-uns des canaux pour matériau de joint (13, 14, 15) s'étend/s'étendent le long de la surface du composant (10).

3. Composant (10) selon la revendication 2, dans lequel le canal pour matériau de joint (13, 14, 15) qui s'étend le long de la surface du composant (10) s'étend au-dessous de la surface du composant (10), ou respectivement au moins un ou quelques-uns des canaux pour matériau de joint (13, 14, 15) qui s'étendent le long de la surface du composant (10) s'étendent au-dessous de la surface du composant (10).

4. Composant (10) selon l'une des revendications précédentes, dans lequel le canal pour matériau de joint (13, 14, 15) ou respectivement au moins un des canaux pour matériau de joint (13, 14, 15) s'étend/s'étendent en éloignement du joint (21, 22) et contient/contiennent du matériau de joint (20), qui est relié d'un seul tenant avec le joint (21, 22).

5. Composant (10) selon l'une des revendications précédentes, dans lequel le composant (10) comporte plusieurs et de préférence deux canaux pour matériau de joint (13, 14, 15), qui s'étendent en éloignement d'un joint (21, 22) et contiennent du matériau de joint (20) qui est relié d'un seul tenant avec le joint (21, 22).

6. Composant (10) selon la revendication 5, dans lequel les canaux pour matériau de joint (13, 14, 15) s'étendent dans des directions sensiblement opposées.

7. Composant (10) selon l'une des revendications 4 à 6, dans lequel le canal ou les canaux pour matériau de joint (13, 14, 15) s'étend/s'étendent sensiblement et de préférence entièrement à l'intérieur du composant (10).

8. Composant (10) selon l'une des revendications précédentes, dans lequel le canal pour matériau de joint (13, 14, 15), ou respectivement au moins un ou quelques-uns des canaux pour matériau de joint (13, 14, 15) s'ouvre/s'ouvrent au moins vers un côté du composant (10).

9. Composant (10) selon l'une des revendications précédentes, dans lequel le canal pour matériau de joint (13, 14, 15), ou respectivement au moins un ou quelques-uns des canaux pour matériau de joint s'étend/s'étendent depuis le joint (21, 22) jusque dans le composant (10).

10. Composant (10) selon l'une des revendications 2 à 9 prise en dépendance de la revendication 2, dans lequel le canal pour matériau de joint (13, 14, 15) qui s'étend le long de la surface du composant s'étend au moins partiellement jusqu'à la surface du composant, et la largeur du canal pour matériau de joint (13, 14, 15) à la surface du composant est plus petite que la plus grande largeur du canal pour matériau de joint (13, 14, 15).

11. Composant (10) selon la revendication 10, dans lequel la largeur du canal pour matériau de joint (13, 24, 15) à la surface du composant est plus petite que 90 %, de préférence plus petite que 70 %, de manière encore plus préférée plus petite que 50 %, de façon encore plus préférée plus petite que 30 %, et s'élève de préférence à environ 10 % de la plus grande largeur du canal pour matériau de joint (13, 14, 15).

12. Composant (10) selon l'une des revendications 10 ou 11, dans lequel la largeur du canal pour matériau de joint (13, 14, 15) à la surface du composant est plus grande que 10 %, de préférence plus grande que 20 %, de manière encore plus préférée plus grande que 30 %, de façon encore plus préférée plus grande que 40 %, et s'élève de préférence à environ 50 % de la plus grande largeur du canal pour matériau de joint (13, 14, 15).

13. Composant (10) selon l'une des revendications précédentes comprenant au moins trois joints conformés, dans lequel au moins deux des joints conformés sont agencés sur des côtés opposés du composant.

14. Composant (10) selon la revendication 13, dans lequel les côtés opposés s'étendent parallèlement l'un à l'autre.

15. Composant (10) selon l'une des revendications précédentes, comprenant au moins trois joints conformés, dans lequel au moins deux des joints conformés sont agencés sur des côtés adjacents du composant.

16. Composant (10) selon la revendication 15, dans lequel les côtés adjacents sont agencés perpendiculairement l'un à l'autre.

17. Composant (10) selon l'une des revendications précédentes, dans lequel le joint ou les joints entoure/entourent au moins une ouverture d'un canal pour fluide du composant (10).

18. Composant (10) selon l'une des revendications précédentes, dans lequel le composant est réalisé en un matériau dur et rigide, respectivement en matière plastique dure, de préférence en matière thermoplastique dure ou une matière thermoplastique technique (par exemple PA, PBT, PPS, PEEK, etc.), de préférence en PEEK (polyéther éther cétone), et dans lequel sont prévues de préférences des matières de charge (par exemple GF, GK, CF, etc.) et/ou des fibres de renforcement (par exemple fibres de verre, fibres de carbone, etc.).

19. Composant (10) selon l'une des revendications précédentes, dans lequel le matériau de joint (20) est réalisé en élastomère thermodurcissable, de préférence en caoutchouc, et de référence en HNBR, NBR, EPDM.

20. Composant (10) selon l'une des revendications 1 à 19, dans lequel le matériau de joint (20) est réalisé en TPE, ACM, silicium, métal (par exemple cuivre) ou céramique.

21. Composant (10) selon l'une des revendications précédentes, dans lequel les joints sont respectivement agencés dans une gorge pour joint, dans un renfoncement et/ou dans un logement.

22. Composant (10) selon l'une des revendications précédentes, dans lequel au moins un joint (21, 22) comprend une bague de joint pour étancher au moins une ouverture d'un canal pour fluide (11, 12) prévu dans le composant, et au moins une ouverture, à relier à celui-ci, d'un canal pour fluide (11, 12) prévu dans un second composant, dans lequel le joint (21, 22) comprend au moins une barrette de rigidification (1027, 1028) qui relie deux emplacements de la bague de joint l'un à l'autre.

23. Composant (10) selon la revendication 22, dans lequel le joint (21, 22) comprend plusieurs barrettes de rigidification (1027, 1028) qui s'étendent de préférence sensiblement parallèlement les unes aux autres.

24. Composant (10) selon l'une des revendications 22 et 23, dans lequel la ou les barrette(s) de rigidification (1027, 1028) présente/présentent une section transversale sensiblement rectangulaire.

25. Composant (10) selon l'une des revendications 22 à 24, dans lequel les ouvertures des canaux pour fluide (11, 12) à relier sont décalées les unes par rapport aux autres.

26. Composant (10) selon l'une des revendications 22 à 25, dans lequel les ouvertures des canaux pour fluide à relier sont associées respectivement à des tronçons terminaux opposés du joint (21, 22).

27. Composant (10) selon l'une des revendications 22 à 26, dans lequel la ou les barrette(s) de rigidification (1027, 1028) est/sont agencée(s) entre deux tronçons du joint (21, 22) qui sont respectivement associés à une ouverture des canaux pour fluide à relier.

28. Composant (10) selon l'une des revendications 22 à 27, dans lequel la ou les barrette(s) de rigidification (1027, 1028) s'étend/s'étendent sensiblement perpendiculairement à une ligne de liaison imaginaire entre les ouvertures des canaux pour fluide à relier.

29. Composant (10) selon l'une des revendications 22 à 28, dans lequel la bague de joint du joint (21, 22), ou respectivement les bagues de joint des joints (21, 22) présente/présentent respectivement une section transversale ronde, ovale, de forme ellipsoïdale, de forme ovoïde, de forme ondulée, rectangulaire, carrée et/ou avec des lignes incurvées.

30. Composant (10) selon l'une des revendications précédentes, dans lequel la bague de joint du joint (21, 22), ou respectivement les bagues de joint des joints (21, 22) présente/présentent respectivement une forme ronde, ovale, de forme ellipsoïdale, de forme ovoïde, de forme ondulée, rectangulaire, carrée et/ou avec des lignes incurvées.

31. Composant (10) selon l'une des revendications précédentes, dans lequel la hauteur de la ou des barrette(s) de rigidification (1027, 1028) s'élève à au moins 5 % de la hauteur du joint, de préférence au moins 10 % de la hauteur du joint, en particulier de préférence au moins 20 % de la hauteur du joint, et s'élève de préférence environ à 30 % de la hauteur du joint (21, 22).

32. Composant (10) selon l'une des revendications précédentes, dans lequel la hauteur de la ou des barrette(s) de rigidification (1027, 1028) s'élève au plus à 70 % de la hauteur du joint, de préférence au plus à 50 % de la hauteur du joint, en particulier de préférence au plus à 40 % de la hauteur du joint, et s'élève de préférence environ à 30 % de la hauteur du joint (21, 22).

33. Procédé pour la fabrication d'un composant (10) selon l'une des revendications précédentes,
**caractérisé en ce que** les joints sont conformés par injection sous pression (moulage transfert) ou par moulage par injection.
